# EUROPEAN PATENT SPECIFICATION

(11) **EP 1 905 682 B1**
(45) Date of publication and mention of the grant of the patent: **10.03.2010**
(21) Application number: 07018318.1
(22) Date of filing: 18.09.2007
(51) Int. Cl.: B62J 99/00, B62J 11/00, G07B 15/00, B62J 6/02

(54) **Antenna attachment structure for motorcycle**
Antennenbefestigungsstruktur für ein Motorrad
Structure de fixation d'antenne pour motocyclette

(30) Priority: 26.09.2006 JP 2006260608
(43) Date of publication of application: 02.04.2008
(73) Proprietor: HONDA MOTOR CO., LTD., Tokyo 107-8556 (JP)
(72) Inventor: Sahata, Tomoyuki, Wako-shi Saitama 351-0193 (JP); Ogawa, Sumitaka, Wako-shi Saitama 351-0193 (JP); Hasegawa, Toru, Wako-shi Saitama 351-0193 (JP); Ando, Masakuni, Wako-shi Saitama 351-0193 (JP)
(74) Representative: Trossin, Hans-Jürgen

(56) References cited:
- EP-A- 1 557 348
- EP-A- 1 609 710
- JP-A- 10 278 865
- US-A1- 2003 168 485

## Description

### BACKGROUND OF THE INVENTION

### Field of the Invention:

The present invention relates to an antenna attachment structure for motorcycle, for attaching an antenna that performs wireless transmissions and receptions of particular information, with the outside.

### Description of the Related Art:

ETC (Electronic Toll Collection) systems for vehicles have been developed and put into practical use for the purpose of reducing traffic congestion associated with payments at toll stations in toll roads such as highways. In the ETC, a communications device mounted on a vehicle and a system of a dedicated lane in a toll station automatically communicate necessary information wirelessly with each other so as to conduct the payment of a toll fee. With the ETC system, vehicles do not need to stop at toll stations, and thus the occurrence of traffic congestion is suppressed.

The ETC system includes a communications device for vehicle and an antenna for wirelessly communicating with a transmission and reception device installed in a toll station. A card, in which information for identifying the user, the bank account number or the like is recorded, is inserted into the communications device for vehicle. It is desirable that the antenna be provided as forward as possible in a vehicle so that a favorable transmission and reception sensitivity of radio waves can be maintained between the antenna and the transmission and reception device in a toll station.

Since the payments at toll stations are troublesome for motorcycles as well as automobiles, research and development have been conducted on an ETC for motorcycle. It is desirable that an antenna be provided to the front portion in a motorcycle as well. However, since the motorcycles have more constraints on mounting the antenna than the automobiles, it is necessary that the antenna be arranged in the motorcycles in consideration of resistance to environment, such as the resistance to water and the resistance to dust.

Against such a background, in Patent Document 1, a configuration is proposed in which an antenna is arranged along the upper surface of a meter case of a motorcycle in consideration of the resistance to environment, accordingly to the preamble of claim 1.

Patent Document 1: Japanese Laid-open Patent Publication No. 10-278865

In the configuration described in Patent Document 1, the antenna is provided to the meter case. However, a meter is not necessarily provided to the front portions, in some types of motorcycles. For example, in scooter-type motorcycles, a meter is provided to a portion rearward, to some extent, of a front screen. In some cruiser-type motorcycles, a meter is arranged on the top portion of a fuel tank.

As in the above-described cases where a meter is not arranged sufficiently forward in a vehicle, it is desirable that a sufficient transmission and reception sensitivity be obtained when an antenna is attached to the meter.

### SUMMARY OF THE INVENTION

The present invention has been made in consideration of the above-described problems. An object of the present invention is to provide an antenna attachment structure for motorcycle, with which a favorable transmission and reception sensitivity can be obtained.

The antenna attachment structure for motorcycle according to the present invention provides the following characteristics.

Firstly, the antenna attachment structure for motorcycle includes: an antenna for performing wireless transmission and reception of particular information between a motorcycle and the outside; and a headlight arranged in the front portion of the motorcycle. In addition, in the antenna attachment structure for motorcycle, the antenna is provided to the headlight.

The provision of the antenna to the headlight as above makes it possible to arrange the antenna in the front and upper portion of the motorcycle. Accordingly, there are little obstacles between the antenna and a transmission and reception device in a toll station or the like. As a result, a favorable transmission and reception sensitivity can be obtained.

Secondly, the antenna attachment structure for motorcycle is characterized in that the antenna is arranged rearward of a reflector in a case of the headlight. With this configuration, since heat from a light source is blocked by the reflector, it is possible to prevent the antenna from being heated. In addition, since the antenna is provided inside the case, the antenna does not protrude, and is not exposed, to the outside. As a result, the aerodynamic characteristic can be prevented from being deteriorated.

Thirdly, the antenna attachment structure for motorcycle is characterized in that the antenna is arranged upward of a light source in the case. When the antenna is arranged upward in this manner, the transmission and reception sensitivity can be further improved.

Fourthly, the antenna attachment structure for motorcycle is characterized in that the antenna is attached to the inner surface of the case, and is spaced from the light source and the reflector. With this configuration, since heat from the light source or the reflector is not transmitted directly to the antenna, the influence of heat on the antenna can be reduced.

Fifthly, the antenna attachment structure for motorcycle is characterized in that the antenna is arranged on the outer side of a case of the headlight. With this configuration, there are little obstacles between the antenna and the transmission and reception device in a toll station or the like. As a result, a much more favorable transmission and reception sensitivity can be obtained.

In the antenna attachment structure for motorcycle according to the present invention, the antenna is provided to the headlight. Since the antenna is arranged in a portion on the front and upper portion of the motorcycle, there are little obstacles between the antenna and a transmission and reception device in a toll station or the like. As a result, a favorable transmission and reception sensitivity can be obtained.

### BRIEF DESCRIPTION OF THE DRAWINGS

Fig. 1 is a side view of a scooter-type motorcycle.
Fig. 2 is a perspective view of the scooter-type motorcycle.
Fig. 3 is a perspective view of the front portion of the scooter-type motorcycle.
Fig. 4 is a cross-sectional side view of the front portion of the scooter-type motorcycle.
Fig. 5 is a cross-sectional side view showing an attachment structure according to an embodiment.
Fig. 6 is an exploded perspective view of an antenna and posts for attachment
Fig. 7 is a schematic view showing an ETC system and an ETC gate.
Fig. 8 is a side view of an off-road-type motorcycle.
Fig. 9 is a cross-sectional side view showing an attachment structure according to a first modified embodiment.
Fig. 10 is a cross-sectional side view showing an attachment structure according to a second modified embodiment.
Fig. 11 is a cross-sectional side view showing an attachment structure according to a third modified embodiment.
Fig. 12 is a cross-sectional side view showing an attachment structure according to a fourth modified embodiment.
Fig. 13 is a cross-sectional side view showing an attachment structure according to a fifth modified embodiment.
Fig. 14 is a partially cross-sectional front view of a rear-view mirror provided with an attachment structure according to a sixth embodiment.
Fig. 15 is a cross-sectional side view of the rear-view mirror provided with the attachment structure according to the sixth embodiment.

### DESCRIPTION OF THE PREFERRED EMBODIMENTS

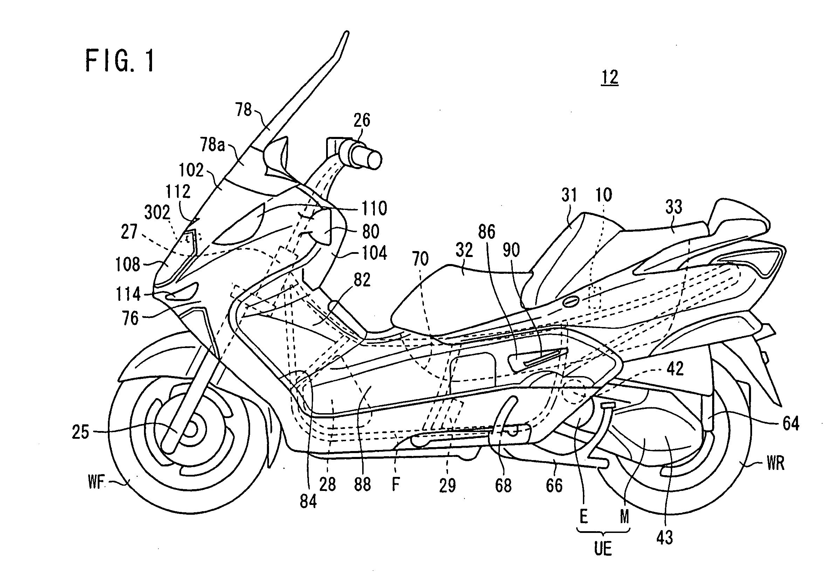

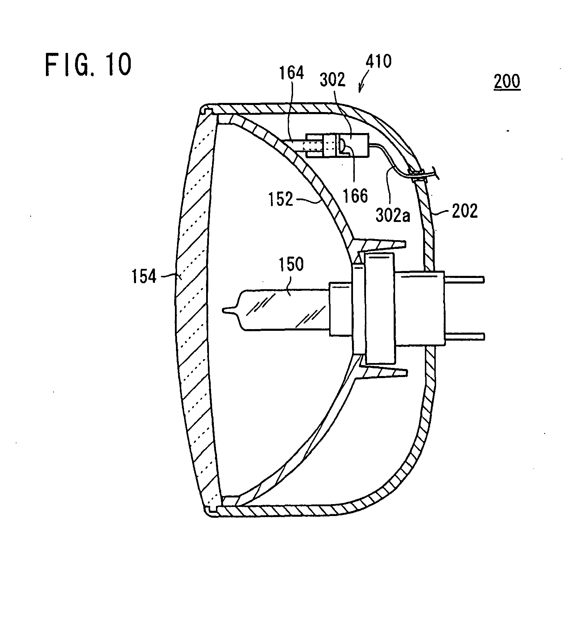

Hereinafter, descriptions will be given of an antenna attachment structure for motorcycle according to the present invention by providing embodiments with reference to the accompanying drawings: Fig. 1 to Fig. 15. The antenna attachment structure according to the embodiment includes a communications device 10 for motorcycle, and is mounted on a motorcycle (vehicle) 12 (refer to Fig. 1). Firstly, the motorcycle 12 will be described. Incidentally, in the following descriptions, the left and right directions of the motorcycle 12 are based on the directions as viewed from a rider straddling a seat of the motorcycle 12.

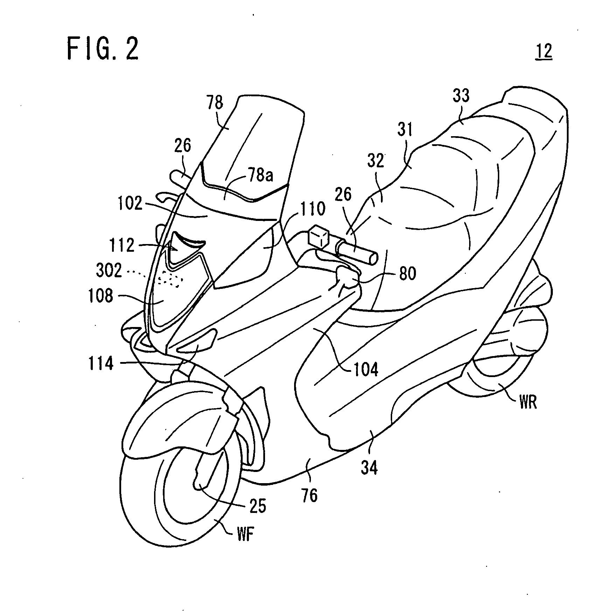

As shown in Fig. 1 and Fig. 2, the motorcycle 12 is a scooter type, and includes front forks 25 and a head pipe 27 in the front end. The front forks 25 rotationally support a front wheel WF, and the head pipe 27 is connected to the front forks 25, and pivotally supports a handlebar 26 so that the handlebar 26 can be steered. A unit swing engine UE is pivotally supported in the middle portion of a vehicle body frame F so as to be swingable in the up-and-down direction. A rear wheel WR is supported on the rear end of the unit swing engine UE. A fuel tank 28 and a radiator 29 are mounted on the vehicle body frame F, forward of the unit swing engine UE while the radiator 29 is arranged rearward of the fuel tank 28. In addition, a rider's seat 31 is arranged on the rear portion of the vehicle body frame F. The rider's seat 31 is a tandem type including a front seat 32 and a rear seat 33. Moreover, a body cover 34 is attached to the vehicle body frame F. The body cover 34 is made of a synthetic resin, and covers the vehicle body frame F, the front portion of the unit swing engine UE, the fuel tank 28 and the radiator 29.

The unit swing engine UE includes a water-cooled engine E and a belt-type continuously variable transmission M. The axial line of the cylinder of the water-cooled engine E is aligned substantially with the horizontal direction. The continuously variable transmission M continuously changes the speed of the output of the engine E with a transmission belt and a pulley, and then transmits the speed to the rear wheel WR. The continuously variable transmission M continuously changes the gear ratio by driving the movable pulley on the side of a crank shaft in accordance with the operation of an electric motor 42 for transmission.

A transmission case 43 for the continuously variable transmission M is arranged consecutively on the left side of a crank case 44 of the engine E in a manner that the transmission case 43 protrudes leftward from the engine E, and the transmission case 43 also extends to the left side of the rear wheel WR. In addition, the front end portion of an unillustrated swing arm is joined to the right side of the crank case 44. The rear wheel WR is pivotally supported between the rear end portion of the transmission case 43 and the rear end portion of the swing arm.

Moreover, the upper end portions of a pair of left and right rear cushions 64 are connected to the rear end portion of the vehicle body frame F, while the lower end portions of the rear cushions 64 are connected respectively to the rear end portion of the transmission case 43 and the rear end portion of the swing arm.

A main stand 66 and a side stand 68 for standing the motorcycle 12 at the time of parking are provided to the motorcycle 12.

In Japan, vehicles are driven on the left side of the road, and the rider gets on and off the vehicle on the left side in many cases. The side stand 68 is provided on the left side of the motorcycle 12 so that the side stand 68 can be easily operated. With the side stand 68, the motorcycle 12 can be caused to stand by itself in a state of slightly inclined leftward.

A storage box 70 for storing goods is provided below the rider's seat 31. The storage box 70 extends from a portion below the front end of the rider's seat 31 to a vicinity of the upper portions of the respective rear cushions 64. The rider's seat 31 also serves as a lid for covering the upper face of the storage box 70, and the space inside the storage box 70 can be exposed by pulling up the rider's seat 31 to the right.

The body cover 34 includes a front cowl 76 provided with a transparent windshield 78 and a pair of left and right of rear-view mirrors 80 on the upper portion of the front cowl 76. An inner cover 82 includes leg shields 84 for covering the front portions of the legs of the driver, and step holders 86. The step holders 86 are arranged adjacent to the rear portion of a center cover 88, and a pillion step 90 on which the rider puts his/her foot is attached to the step holder 86 in a manner that the pillion step 90 can be stored and exposed.

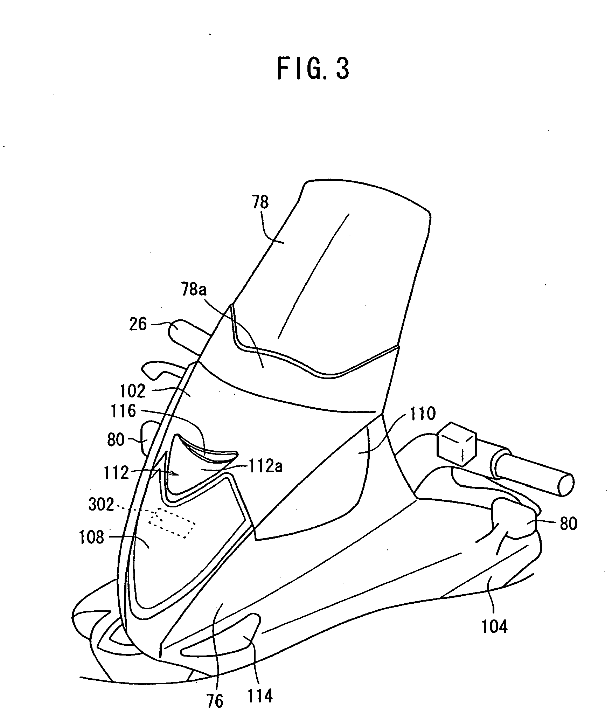

As shown in Fig. 3, the front portion of the body cover 34 is formed to be the front cowl 76. The front cowl 76 covers as a whole the center portion of the handlebar 26 (that is, a handlebar stem 122), a meter unit 126, the head pipe 27 and the like, which are positioned on the front side of the motorcycle 12. The front cowl 76 forms a smoothly curved surface tapered toward the tip of the front cowl 76. Accordingly, an air resistance of the motorcycle 12 is reduced

The front cowl 76 includes a center garnish 102, side portions 104 protruding respectively to the left and right, and the windshield 78 provided above the center garnish 102. The center garnish 102 and the windshield 78 are integrally and smoothly connected to each other, so that traveling wind is likely to flow from the center garnish 102 toward the windshield 78.

The windshield 78 provides a windbreak effect for the rider and an effect of reducing the drag force at the time of traveling. The windshield 78 is almost entirely transparent, thus providing a favorable field of vision to the rider. Only a lower portion 78a of the windshield 78 is painted in black to the extent of not obstructing the field of vision, providing a shading effect for the meter unit 126 arranged on the inner side of the windshield 78, and an effect on a design.

The center garnish 102 includes a headlight 108, turn signal lamps 110 and a wind inlet 112 and a pair of small wind inlets 114. The headlight 108 is positioned in the center of the front end portion of the center garnish 102. The turn signal lamps 110 are provided to slightly high positions respectively on the left and right sides of the center garnish 102. The wind inlet 112 is provided to a position above the headlight 103. The pair of small wind inlets 114 are provided to portions in the front end respectively on the left and right sides. The wind inlet 112 includes a bottom face 112a, and has an inverted triangular shape with an apex heading downward. The headlight 108 is fixed in a way that the headlight 108 is not interlocked with the handlebar 26. The bottom face 112a is formed in a manner of being grooved deeper as extending upward and toward the center. A thin opening portion 116 is provided to the upper end of the wind inlet 112.

As is clear from Fig. 1 to Fig. 3, the headlight 108 is provided to the front portion of the motorcycle 12. The front wheel WF is positioned frontward of the headlight 108. However, since the front wheel WF rotates when the motorcycle 12 travels, the front wheel WF is thus not suitable for the attachment of components (an antenna 302 to be described later). For this reason, the headlight 108 is virtually the frontmost portion in the motorcycle 12. The windshield 78 is positioned upward of the headlight 108. However, if a component is attached to the windshield 78, the field of view is obstructed. Moreover, the windshield 78 does not have enough hardness for the attachment of a component. Accordingly, the windshield 78 is not suitable for the attachment of a component, and the headlight 108 is virtually positioned at the uppermost portion on the frontmost side in the motorcycle 12.

The wind inlet 112 is a narrow region in comparison with the entire area of the front cowl 76, and can thus introduce an adequate amount of air from the bottom face 112a to the opening portion 116.

Each of the small wind inlets 114 can introduce an adequate amount of air to an opening portion positioned deeper, as well as the wind inlet 112.

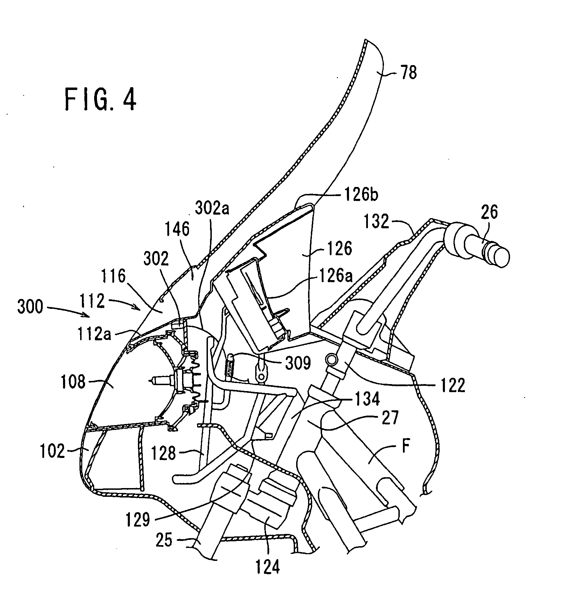

As shown in Fig. 4, the head pipe 27, the handlebar stem 122, a fork bridge 124, the meter unit 126, a stay 128, a partition plate 129 and the headlight 108 are provide to the inside of the front cowl 76.

The head pipe 27 constitutes a part of the front end portion of the vehicle body frame F, and rotatably holds the handlebar stem 122. The upper end portion of the handlebar stem 122 is connected to the center portion of the handlebar 26 in the left-and-right direction. A handlebar cover 132 is provided to the handlebar 26. The lower end portion of the handlebar stem 122 is connected to the pair of front forks 25 with the fork bridge 124 in between. A bracket 134 for fixing the stay 128 is provided to the front face of the head pipe 27. The stay 128 is formed of a plurality of pipes combined with one another, and supports the meter unit 126, the headlight 108 and the front cowl 76. The partition plate 129 is attached to the lower portion of the stay 128, and covers the head pipe 27 and the meter unit 126 from below.

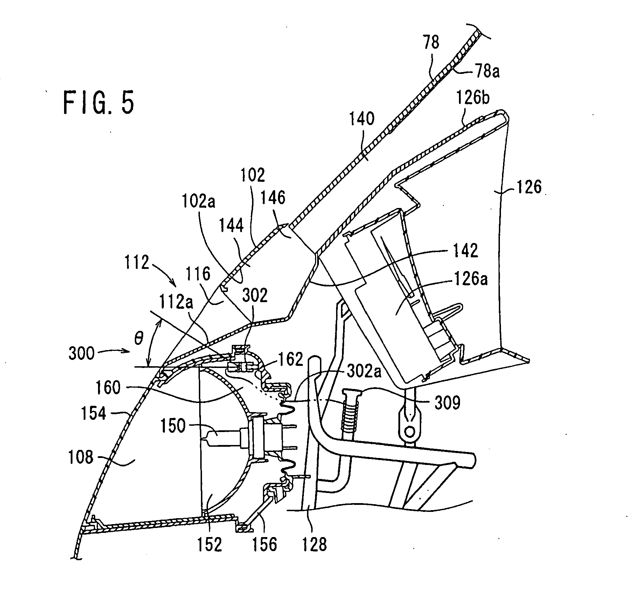

As shown in Fig. 5, the headlight 108 includes a bulb (a light source) 150, a dish-like reflector 152, a lens 154 and a case 156. The reflector 152 is provided to the surrounding of the bulb 150, and reflects light to the front. The lens 154 is provided to the front face of the head 1. The case 156 supports the bulb 150 and the lens 154, and covers the rear face of the reflector 152. When emitting light, the bulb 150 generates heat to some extent.

The reflector 152 is fixed to the base of the bulb 150 and also to a part of the case 156. As a bulb 150, any light emitter can be employed as long as the light emitter produces a sufficient amount of light. For example, an LED (Light Emitting Diode) or an EL (Electroluminescence) may be used. In addition to the bulb 150, a position light may be provided to the headlight 108.

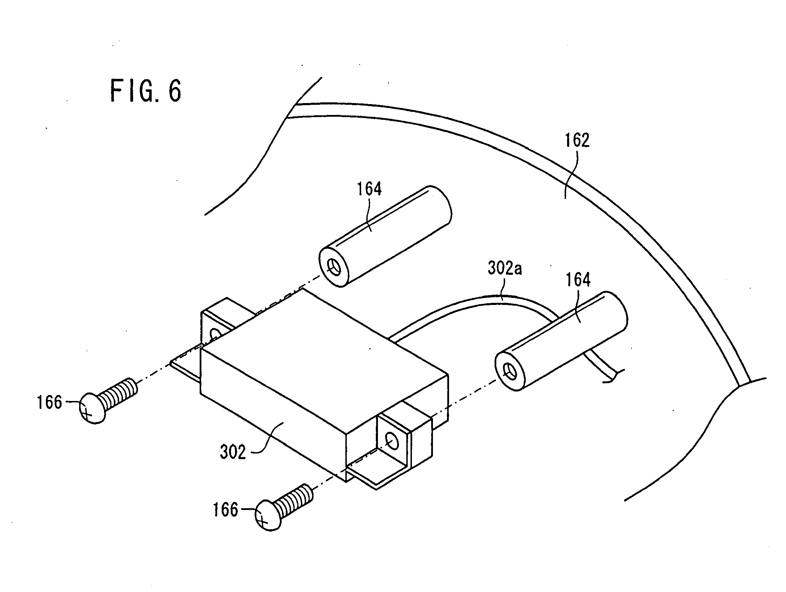

The headlight 108 further includes the antenna 302. As shown in Fig. 6, two posts 164, which protrude in a substantially horizontal direction, are provided to positions upward of the bulb 150 on an inner surface 162 of the case 156. The antenna 302 is fixed to these posts 164 with screws 166. The posts 164 are aligned with a direction in which the radio directivity of the antenna 302 is enhanced. The use of the posts 164 eliminates the need for an adhesive agent, a double-sided adhesive tape or the like, and also eliminates the need for further processing holes for fixation.

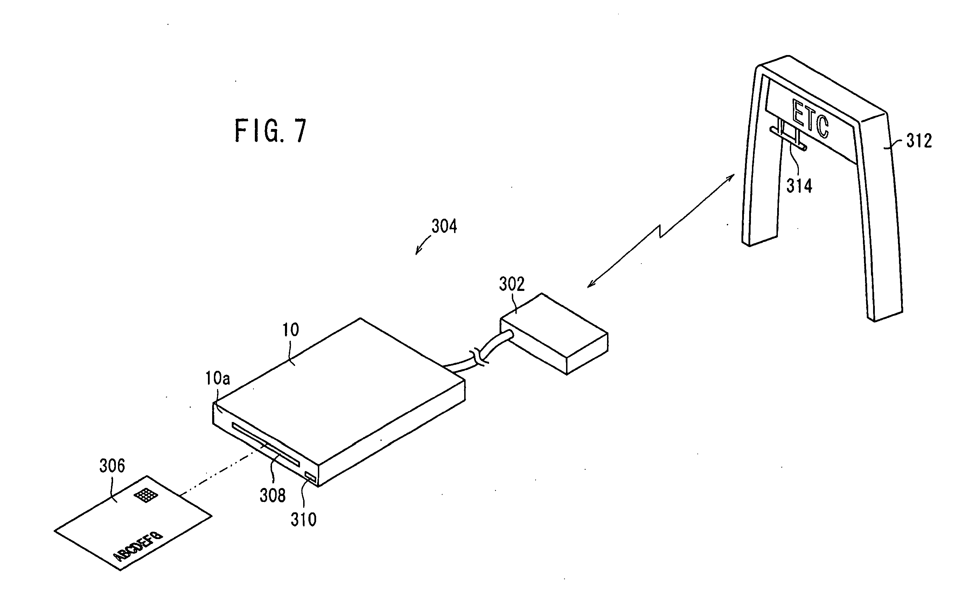

The antenna 302 carries out communications with a transmitting and receiving device 314 of an ETC gate 312 (refer to Fig. 7) which is to be described later, in a high-frequency band 5.8 MHz, at a communication speed of 1024 kbps, with the ASK modulation scheme. Since the antenna 302 is one which carries out short-distance communications in a high frequency, the antenna 302 can be formed into a compact shape.

When a cable 302a of the antenna 302 is long, excess part of the cable 302a may be wound around and fixed to a post 309 (refer to Fig. 5) in the vicinity. The post 309 may be provided to the stay 128 or the case 156. This makes it possible to prevent the wiring from being unwound later.

As described above, by providing the antenna 302 in the headlight 108, the antenna 302 can be arranged in the front portion of the motorcycle 12, and concurrently in the upper portion thereof. Moreover, since the motorcycle 12 runs forward, it is possible to obtain a favorable transmission and reception sensitivity with the transmission and reception device 314 (refer to Fig. 7) which is to be positioned forward and upward of the motorcycle 12. This is because only the resin-made case 156 and the lens 154 exist between the antenna 302 and the transmission and reception device 314, hardly attenuating the radio waves.

The antenna 302 is arranged rearward of the reflector 152 in the case 156. Since heat from the bulb 150 is blocked by the reflector, it is possible to prevent the antenna 302 from being heated. It goes without saying that, since the antenna 302 itself is covered with the case 156, the antenna 302 is invisible from the outside. In addition, since the cable 302a connected to the antenna 302 is drawn into the front cowl 7 from the case 156, no portion is exposed to the outside. Accordingly, the aerodynamic characteristic of the motorcycle 12 is not deteriorated.

The antenna 302 does not protrude to the outside, not only in the case of being installed as standard equipment, but also in the case of being installed as optional equipment by the rider, a dealer or the like. Accordingly, the aerodynamic characteristic of the motorcycle 12 is not deteriorated, and also the product quality in terms of the appearance is enhanced.

Since the antenna 302 is arranged upward of the bulb 150 in the case 156, there is less barriers to the communications. Accordingly, the transmission and reception sensitivity is further enhanced.

The antenna 302 is attached to the inner surface of the case 156, and is spaced from the bulb 150 and the reflector 152. For this reason, heat from the bulb 150 or the reflector 152 is not transmitted directly to the antenna 302. In addition, the antenna 150 can be arranged by effectively utilizing a space 160 between the reflector 152 and the case 156. As a result, the present invention can be favorably applied to the motorcycle 12 with many spatial constraints.

Next, descriptions will be given of the ETC system 304 including the antenna 302 with reference to Fig. 7.

As shown in Fig. 7, the antenna 302 constitutes the ETC system 304 together with the communications device 10 for motorcycle. The communications device 10 for motorcycle has a thin plate-like shape. A slot 308 and an eject switch 310 are provided to one narrower end face 10a of the communications device 10 for motorcycle. A card 306 is inserted into, and pulled out from, the slot 308. The eject switch 310 is a switch for ejecting the card 306 having been inserted into the communications device 10 for motorcycle.

The card 306 includes an IC chip inside. Information on the user, a bank account for the payment of toll or the like is encoded and stored in the IC chip, and is read out by the communications device 10 for motorcycle.

When a vehicle passes through a toll station of a toll road, the ETC system 304 automatically communicates with the transmission and reception device 314 of the ETC gate 312 which is provided to the toll station. The ETC system 304 reads out the information recorded in the card 306, and then notifies the transmission and reception device 314 of the information on the section where the motorcycle 12 has run in the toll road, and the information on the type of the vehicle, the credit card company and the like. With this information, the transmission and reception device 314 determines the toll fee of the vehicle, and performs predetermined processing to request the predetermined credit card company for the toll fee. By using the ETC system 304 as described above, the motorcycle 12 does not need to stop at the toll station, thus suppressing occurrence of traffic congestion.

The communications device 10 for motorcycle of the ETC system 304 is provided, for example, in the storage box 70 (refer to Fig. 1), and is thus invisible from the outside. In addition, as described above, the antenna 302 and the cable 302a are also not exposed to the outside. In other words, all the components of the ETC system 302 are arranged so as to be invisible from the outside. Accordingly, it cannot be seen from the outside that the motorcycle 12 is equipped with the ETC system 304 while enhancing environmental resistance performance, such as the resistance to water and the resistance to dust. Moreover, since the mounting of the ETC system 302 does not cause any extra protrusion, the aerodynamic characteristic and the product quality in terms of the appearance are not deteriorated.

An attachment structure 300 according to the present embodiment includes the headlight 108 and the antenna 302.

The antenna 302 of the ETC system 304 configured as described above, and the attachment structure of the antenna 302 are operated as described below.

Firstly, the rider raises the rider's seat 31 to expose the storage box 70 before riding the motorcycle 12. The rider then inserts the card 306 into the slot 308 of the communications device 10 for motorcycle, which is provided inside the storage box 70. The communications device 10 for motorcycle reads out information on the user, the bank account and the like to be used for the payment of the toll fee from the card 306 inserted therein.

Next, the rider closes the rider's seat 31, and straddles the rider's seat 31 to start driving the motorcycle 12. Since the antenna 302 is not exposed to the outside, traveling wind does not directly hit on the antenna 302 during the driving of the motorcycle 12.

When the motorcycle 12 enters or exits the toll road such as a highway, the communications device 10 for motorcycle communicates with the transmission and reception device 314 of the ETC gate 312 via the antenna 302 to transmits, to the transmission and reception device 314, the information on: the user, the bank account for the payment of the toll fee, the section where the motorcycle 12 has run in the toll road, the type of the vehicle, the credit card company and the like. With the information, the transmission and reception device 314 performs the processing to request the predetermined credit card company for the payment of the toll fee.

At this time, since the antenna 302 is provided to the front portion of the motorcycle 12, and is also arranged with the posts 164 in the direction in which the radio directivity of the antenna 302 is enhanced, secure communications are performed with a high transmission and reception sensitivity between the antenna 302 and the transmission and reception device 314.

When the rider arrives at the destination and terminates the driving of the motorcycle 12, the rider stops the engine of the motorcycle 12. The rider raises the rider's seat 31, and presses the eject switch 310 of the communications device 10 for motorcycle so as to take out the card 306. The operation of the eject switch 310 allows the card 306 to be discharged without dropping off, and then the rider pulls out the card 306.

As described above, in the attachment structure 300 according to the present embodiment, the antenna 302 does not protrude from the outer surface. For this reason, an air resistance of the motorcycle 12 is hardly increased, and further the antenna 302 is not subject to an excessive wind pressure. In addition, the antenna 302 is provided to the front and upper portion of the motorcycle 12, there is less obstacles between the antenna 302 and the transmission and reception device in the toll station. As a result, a favorable transmission and reception sensitivity can be obtained.

In addition, the antenna 302 is fixed in a manner that the position and direction of the antenna 302 are defined by the posts 164. This makes it easy to install the antenna 302 while adjusting the direction, in which the radio directivity of the antenna 302 is high, within an angle θ (refer to Fig. 5) of a range in which the transmission and reception device 314 is supposed to exist. For this reason, even the rider who does not have a special knowledge, meter or tool can easily install the antenna 302 in a position and direction in which a high sensitivity can be obtained. Accordingly it is possible to expand the range of mechanic shops and workers.

The antenna 302 is invisible from the rider, and does not obstruct the front field of view. The antenna 302 also allows the rider not to be unnecessarily conscious of the existence of the antenna 302.

Only one headlight 108 is provided to the motorcycle 12 in the above-described example. However, when a plurality of headlights 108 are provided, the antenna 302 may be provided to one of the headlights 108.

In the above descriptions, the descriptions have been given of a case where the attachment structure 300 is applied to the motorcycle 12. However, the attachment structure 300 may be applied also to automobiles. In other words, since the automobile is provided with a headlight in the front portion of the automobile, it is possible to obtain a favorable transmission and reception sensitivity by providing the antenna 302 to the headlight. Moreover, the antenna 302 is not limited to one for ETC, but may be one for GPS (Global Positioning System), for example.

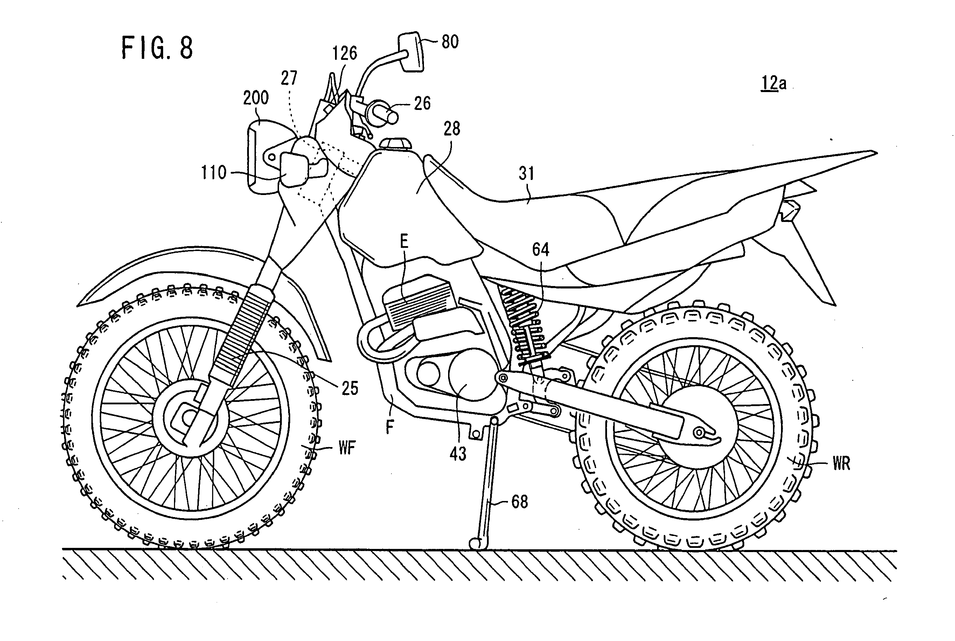

Subsequently, descriptions will be given of modified embodiments of the attachment structure of the antenna 302 with reference to Fig. 8 to Fig. 15. Incidentally, the same portions as those in the motorcycle 12 and in the attachment structure 300 will be denoted with the same reference numerals, and descriptions thereof will be omitted, in the following descriptions. These modified embodiments also provide the same effects as those of the attachment structure 300.

An attachment structure 400 according to this modified embodiment is installed in a motorcycle 12a as shown in Fig. 8. The motorcycle 12a is an off-road type, and is not provided with the front cowl 76 as in the case of the motorcycle 12, so that the entirety of the headlight 200 is exposed. The headlight 200 corresponds to the above-described headlight 108, and is provided to the front and upper portion of the motorcycle 12a. Specifically, the headlight 200 is provided to a portion slightly obliquely downward of the handlebar 26 and the meter unit 126, and is fixed to substantially frontward of the head pipe 27. The headlight 200 is fixed in a way that the headlight 200 rotates integrally with the steering of the handlebar 26.

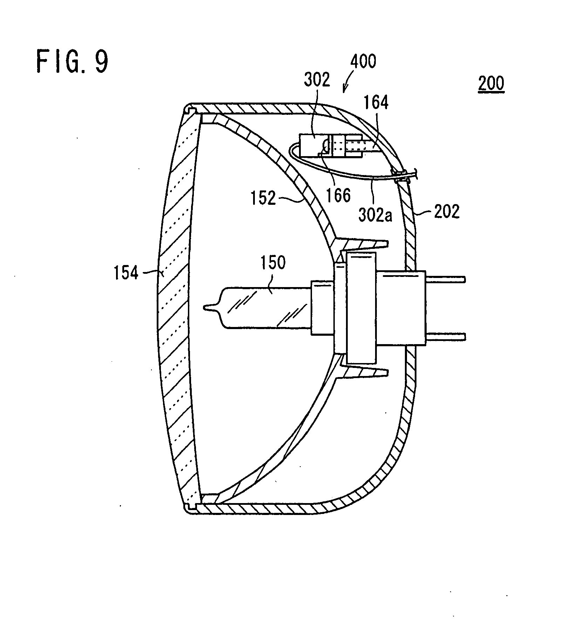

As shown in Fig. 9, the headlight 200 has a case 202 with a substantially hemispherical shape, and the reflector 152 and the lens 154 are held at the front end portion of the case 202. In the attachment structure 400, the antenna 302 is supported with the two posts 164 extending frontward from the rear face of the inner side of the case 202.

In the attachment structure 400 as above, since the headlight 200 is exposed, there is much less barriers against radio waves. Accordingly, a favorable transmission and reception sensitivity can be obtained.

As shown in Fig .10, an attachment structure 410 according to a second modified embodiment is configured with the headlight 200 as a base. The two posts 164 for supporting the antenna 302 extends rearward from the upper rear face of the reflector 152. In the attachment structure 410 as above, depending on the direction of the cable 302a with respect to the main body of the antenna 302, the cable 302a can be easily drawn out to the outside of the case 202.

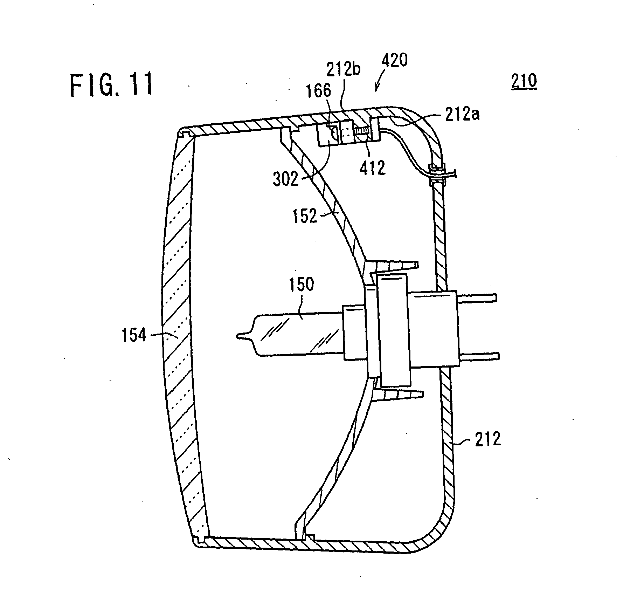

As shown in Fig. 11, an attachment structure 420 according to a third modified embodiment is configured with a headlight 210 as a base. The headlight 210 is installed in, for example, the motorcycle 12a. A case 212 of the headlight 210 has a substantially block U-shape in a side cross-sectional view. The reflector 152 is held at the middle portion of the case 212 while the lens 154 is held at the front end portion of the case 212.

In the attachment structure 420, two ribs 412 corresponding to the posts 156 are provided. Each of the two ribs 412 is provided rearward of the reflector 152 to a ceiling surface 212a of the inner side of the case 212, and the screw 166 can be threaded into the rib 412 from the front side. The antenna 302 is fixed to the ribs 412 with the screws 166, and is in contact with the ceiling surface 212a to be stabilized.

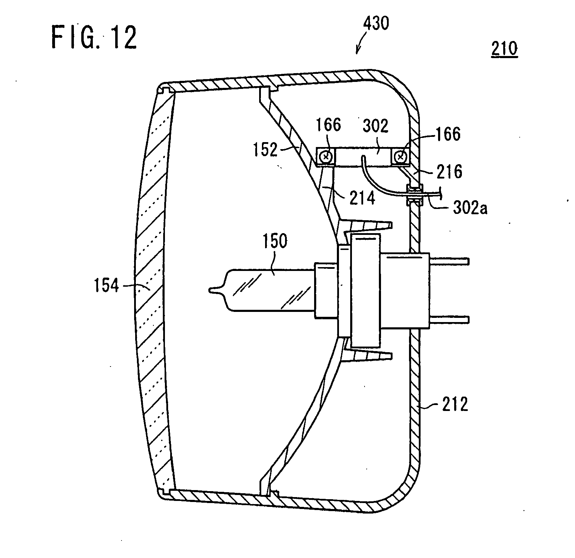

As shown in Fig. 12, an attachment structure 430 according to a fourth modified embodiment is configured with the headlight 210 as a base. The attachment structure 430 includes a first seating 214 and a second seating 216. The first seating 214 protrudes slightly rearward from the upper portion of the reflector 152 while the second seating 216 protrudes slightly frontward from the upper portion of the inner face of the case 212. The first and second seating 214 and 216 are provided at substantially the same height, and support the two end portions of the antenna 302, respectively. The antenna 302 is fixed with an adhesive agent or posts extending from both sides. Accordingly, in the attachment structure 430, since the antenna 302 is provided in a manner of lying from the case 212 to the reflector 152, the antenna 302 is stabilized.

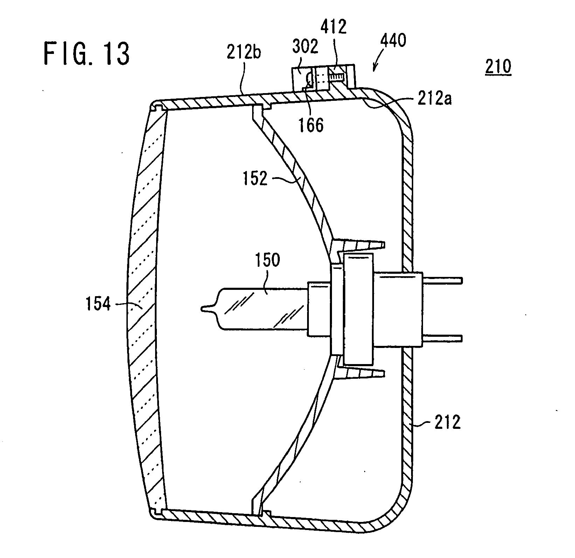

As shown in Fig. 13, an attachment structure 440 according to a fifth modified embodiment, the antenna 302 is provided to an upper surface 212b of the case 212. Specifically, the two ribs 412 described above (refer to Fig. 11) are provided to the upper surface 212b, and the antenna 302 is fixed to the ribs 412 with the screws 166, so that the antenna 302 is in contact with the upper surface 212b to be stabilized.

In the attachment structure 440 as above, since the antenna 302 is arranged on the outer side of the case 212, there is no barrier between the antenna 302 and the transmission and reception device 314. As a result, it is possible to obtain a much favorable transmission and reception sensitivity.

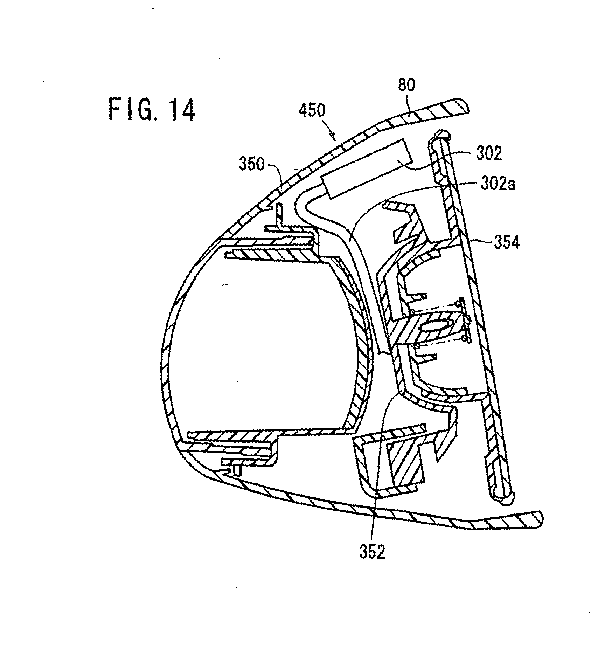

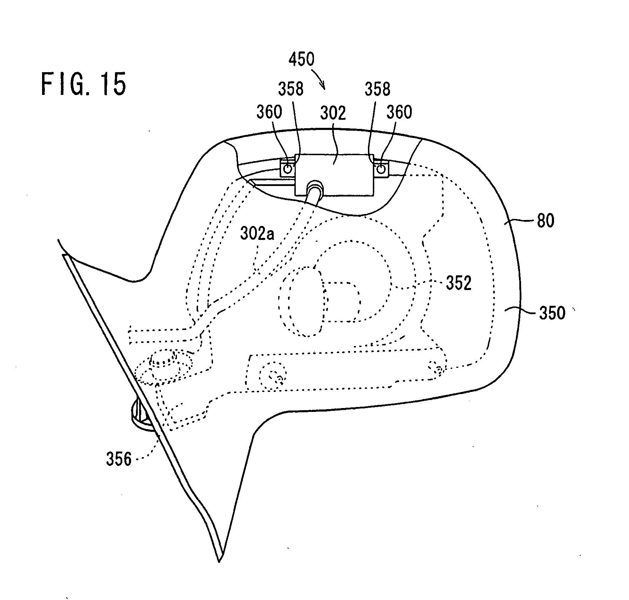

Next, as shown in Fig. 14 and Fig. 15, an attachment structure 450 according to a fifth modified embodiment is provided to the rear-view mirror 80. This attachment structure 450 is applied to, for example, the above-described motorcycle 12.

The rear-view mirror 80 is provided integrally with the front cowl 76 (refer to Fig. 1), and is configured with a resin-made cover 350 as a base. The rear-view mirror 80 includes a core 352, a mirror 354, a foldable mechanism 356 and the antenna 302 inside the cover 350. The mirror 354 can tilt about the core 352 as the center in an arbitrary direction. The antenna 302 is provided to the upper portion of a space between the core 352 and the mirror 354. Two posts 358 protruding in a substantially horizontal direction are provided to the upper portion on the inner surface of the cover 350, and the antenna 302 is fixed to these posts 358 with screws 360.

As described above, according to the attachment structure 450, it is possible to arrange the antenna 302 by effectively utilizing the space inside the cover 350. In addition, the rear-view mirror 80 is provided to the portion on the considerably front side of the motorcycle 12, and also the cover 350 is made of a resin. Accordingly, radio waves are hardly attenuated, and it is thus possible to perform secure transmission and reception.

To provide an antenna attachment structure for motorcycle, with which a favorable transmission and reception sensitivity can be obtained. A headlight (108) is provided to the front portion of a motorcycle (12), and includes a bulb (150), a reflector (152), a lens (154), a case (156) and an antenna (302). The antenna (302) performs wireless transmission and reception of particular information with the outside. The antenna is arranged, rearward of the reflector (152), and upward of the bulb (150), in the case (156). The antenna (302) is attached to the inner surface of the case (156), and is spaced from the bulb (150) and the reflector (152).

## Claims

1. An antenna (302) attachment structure for motorcycle (12), comprising:
an antenna (302) for performing wireless transmission and reception of particular information between a motorcycle (12) and the outside; and
a headlight (108, 200, 210) arranged in the front portion of the motorcycle (12),
**characterized in that** the antenna (302) is provided to the headlight (108, 200, 210).

2. The antenna (302) attachment structure for motorcycle (12) according to claim 1 further comprising:
a reflector (152); and
a case (156, 212) of the headlight (108, 200, 210),
wherein the antenna (302) is arranged rearward of the reflector (152) in the case (156, 212) of the headlight (108, 200, 210).

3. The antenna (302) attachment structure for motorcycle (12) according to claim 2 further comprising a light source (150),
wherein the antenna (302) is arranged upward of the light source (150) in the case (156, 212).

4. The antenna (302) attachment structure for motorcycle (12) according to any one of claims 2 and 3, wherein the antenna (302) is attached to the inner surface of the case (156, 212), and is spaced from the light source (150) and the reflector (152).

5. The antenna (320) attachment structure for motorcycle (12) according to claim 1, wherein the antenna (302) is arranged on the outer side of a case (156, 212) of the headlight (108, 200, 210).

## Patentansprüche

1. Befestigungsstruktur einer Antenne (302) für ein Kraftrad (12), umfassend:
eine Antenne (302) zur Durchführung von drahtlosem Senden und Empfang von besonderer Information zwischen einem Kraftrad (12) und der Umgebung; und
einen Scheinwerfer (108, 200, 210), der in einem Frontabschnitt des Kraftrads (12) angeordnet ist,
**dadurch gekennzeichnet, dass** die Antenne (302) an dem Scheinwerfer (108, 200, 210) vorgesehen ist.

2. Die Befestigungsstruktur einer Antenne (302) für ein Kraftrad (12) gemäß Anspruch 1, ferner umfassend:
einen Reflektor (152); und
ein Gehäuse (156, 212) des Scheinwerfers (108, 200, 210),
worin die Antenne (302) hinter dem Reflektor (152) in dem Gehäuse (156, 212) des Scheinwerfers (108, 200, 210) angeordnet ist.

3. Die Befestigungsstruktur einer Antenne (302) für ein Kraftrad (12) gemäß Anspruch 2, die ferner eine Lichtquelle (150) aufweist,
worin die Antenne (302) oberhalb der Lichtquelle (150) in dem Gehäuse (156, 212) angeordnet ist.

4. Die Befestigungsstruktur einer Antenne (302) für ein Kraftrad (12) gemäß einem der Ansprüche 2 und 3, worin die Antenne (302) an der Innenoberfläche des Gehäuses (156, 212) angebracht und mit Abstand von der Lichtquelle (150) und dem Reflektor (152) angeordnet ist.

5. Die Befestigungsstruktur einer Antenne (302) für ein Kraftrad (12) gemäß Anspruch 1, worin die Antenne (302) an der Außenseite eines Gehäuses (156, 212) des Scheinwerfers (108, 200, 210) angeordnet ist.

## Revendications

1. Structure de fixation d'antenne (302) pour motocycle (12), comprenant :
une antenne (302) pour réaliser la transmission et la réception sans fil d'une information particulière entre un motocycle (12) et l'extérieur ; et
un phare (108, 200, 210) agencé dans la partie avant du motocycle (12),
**caractérisée en ce que :**
l'antenne (302) est prévue sur le phare (108, 200, 210).

2. Structure de fixation d'antenne (302) pour motocycle (12) selon la revendication 1, comprenant en outre :
un réflecteur (152) ; et
un boîtier (156, 212) du phare (108, 200, 210),
dans laquelle l'antenne (302) est agencée vers l'arrière du réflecteur (152) dans le boîtier (156, 212) du phare (108, 200, 210).

3. Structure de fixation d'antenne (302) pour motocycle (12) selon la revendication 2, comprenant en outre une source de lumière (150), dans laquelle l'antenne (302) est agencée vers le haut de la source de lumière (150) dans le boîtier (156, 212).

4. Structure de fixation d'antenne (302) pour motocycle (12) selon l'une quelconque des revendications 2 et 3, dans laquelle l'antenne (302) est fixée sur la surface interne du boîtier (156, 212), et est espacée de la source de lumière (150) et du réflecteur (152).

5. Structure de fixation d'antenne (320) pour motocycle (12) selon la revendication 1, dans laquelle l'antenne (302) est agencée sur le côté externe d'un boîtier (156, 212) du phare (108, 200, 210).
